# FASCICULE DE BREVET EUROPEEN

(11) **EP 1 871 632 B1**
(45) Date de publication et mention de la délivrance du brevet: **02.06.2010**
(21) Numéro de dépôt: 06726161.0
(22) Date de dépôt: 31.03.2006
(51) Int. Cl.: B60K 15/04

(54) **DISPOSITIF ANTIVOL ET ANTI-DEVERSEMENT POUR RESERVOIR DE LIQUIDE, NOTAMMENT RESERVOIR DE CARBURANT**
DIEBSTAHLSICHERUNGS- UND ÜBERLAUFSCHUTZVORRICHTUNG FÜR FLÜSSIGKEITSBEHÄLTER, INSBESONDERE EINEN KRAFTSTOFFBEHÄLTER
ANTITHEFT AND ANTI-OVERFLOW DEVICE FOR LIQUID TANK, IN PARTICULAR FUEL TANK

(30) Priorité: 31.03.2005 FR 0503188; 22.12.2005 FR 0513183
(43) Date de publication de la demande: 02.01.2008
(73) Titulaire: MOUGENOT PROTECTION INNOVATION, 88560 Saint Maurice sur Moselle (FR)
(72) Inventeur: MOUGENOT, Philippe, 88560 Saint Maurice sur Moselle (FR)
(74) Mandataire: Metz, Paul
(86) Numéro de dépôt international: PCT/FR2006/000712
(87) Numéro de publication internationale: WO 2006/103359

(56) Documents cités:
- WO-A-2005/002897
- DE-A1- 2 541 646
- FR-A- 2 833 889
- US-A- 1 575 097
- US-A- 2 411 505
- US-A- 2 765 948
- US-A- 4 653 660
- US-A- 4 732 188
- US-A- 5 467 621
- US-B1- 6 685 043

## Description

La présente invention concerne un dispositif antivol, anti-intrusion et anti-déversement pour réservoir de liquide, notamment de carburant ou de combustible selon le préambule de la revendication 1.

Le but de l'invention est de fournir un dispositif antivol prévu pour être mis en place comme le bouchon de réservoir d'origine. Ce dispositif doit empêcher le siphonnage du réservoir qui en est équipé ainsi que toute tentative visant à prélever frauduleusement du carburant ou un autre liquide dans un réservoir.

Pour des raisons de sécurité, ce dispositif est également prévu pour éviter le déversement du liquide contenu dans le réservoir en cas de forte inclinaison du véhicule ou de perte du bouchon. Il évite aussi le débordement du liquide lors de son remplissage.

Ce dispositif peut être monté aisément sur l'orifice d'entrée de n'importe quel type de réservoir de liquide sans qu'il soit nécessaire de le modifier tout en permettant de conserver le bouchon de fermeture d'origine.

Le dispositif antivol peut comprendre également des moyens anti-vandalisme permettant de retenir de petits corps étrangers introduits par le bouchon du réservoir afin que ceux-ci ne tombent pas au fond du réservoir.

Avantageusement, ce dispositif est de fabrication simple et peu onéreuse.

Ce dispositif est particulièrement bien adapté pour équiper les réservoirs de carburant des véhicules automobiles et des camions.

Pour résoudre ces problèmes techniques, divers bouchons de réservoir ont été proposés. On connaît par exemple des dispositifs anti-intrusion permettant d'empêcher l'introduction d'un conduit destiné à siphonner le réservoir.

On connaît également de nombreux bouchons de sécurité étanches condamnant l'accès au réservoir par un verrouillage à clef. Généralement, ce dernier type de dispositif n'empêche nullement le siphonnage du réservoir une fois le bouchon fracturé.

Ainsi, par les brevets US n° 4,630,748 au nom de RUSSELL D. KELLER et US n° 5,476,185 au nom de SNYDER TANK CORPORATION, on connaît un dispositif de remplissage anti-siphonnage constitué principalement d'un tube fixé sur l'ouverture du réservoir et plongeant dans ce dernier. Des ouvertures latérales sur ce tube permettent le passage du liquide et donc le remplissage du réservoir mais empêchent l'introduction d'un tube ou d'un autre moyen permettant de prélever frauduleusement du liquide. Cependant, ce dispositif ne s'adapte pas aisément à n'importe quel type de réservoir et il ne présente aucune fonction anti-déversement

Un bouchon de sécurité empêchant l'accès au réservoir par un simple verrouillage est divulgué par le brevet US n° 5,533,766 au nom de WEBASTON KAROSSERIESYSTEME GMBH. Cependant, il n'empêche pas le siphonnage du réservoir une fois l'ouverture de ce dernier déverrouillée ou fracturée. En outre, ce dispositif est enlevé pour le remplissage du réservoir, il n'agit donc en rien contre le débordement.

Enfin, on connaît un dispositif antivol et anti-déversement selon le préamble de la revendication 1 maintenu en position entre le fond d'un réservoir et la structure intérieure de sous-face de l'orifice de sortie de celui-ci, divulgué dans le brevet FR n° 2,833,889 au nom du présent inventeur. Ce dispositif est cependant d'une conception coûteuse et complexe, et sa mise en place est longue et difficile, ce qui ne permet pas de répondre de manière avantageuse au problème technique. Notamment, il n'est pas prévu pour être mis en place comme le bouchon de réservoir d'origine.

Pour résoudre ce problème technique, le dispositif selon l'invention les caractéristiques de la revendication 1.

Le corps comporte deux enveloppes coaxiales, préférentiellement cylindriques, un tube escamotable de remplissage et un corps tubulaire plongeur, formant un ensemble coaxial plongeur. Le tube escamotable de remplissage est extractible en saillie hors du corps tubulaire plongeur afin de former un tube escamotable de remplissage permettant le remplissage à ras bord. Le corps tubulaire plongeur comprend une collerette de fixation prévue pour être vissée sur l'extrémité du goulot de l'orifice du réservoir à la place du bouchon de réservoir. Cette collerette de fixation est surmontée par une collerette d'extrémité formant un goulot pour l'orifice du réservoir sur lequel peut être adapté le bouchon du réservoir. Dans sa partie supérieure, le corps tubulaire plongeur présente des ouvertures transversales afin de laisser passer le liquide vers le réservoir lors du remplissage lorsque le tube escamotable de remplissage est en position haute.

En cas de déverrouillage ou de fracture du bouchon du réservoir, ces ouvertures transversales sont trop étroites pour permettre l'introduction d'un tube de siphonnage de diamètre suffisant. Au pire, seule la tranche de liquide du volume supérieur situé au niveau des ouvertures transversales peut être siphonnée. Avec le dispositif antivol pour réservoir de liquide de l'invention, il est donc impossible de prélever frauduleusement la quantité occupant le reste du volume du réservoir.

Par ailleurs, lorsque le tube escamotable de remplissage est en place dans le corps tubulaire plongeur, il obture les ouvertures transversales du corps tubulaire plongeur, ce qui empêche tout déversement de liquide hors du réservoir, même en absence du bouchon de réservoir.

Enfin, le dispositif antivol peut comprendre un obturateur de sécurité monté dans la partie supérieure du tube escamotable de remplissage qui procure une sécurité supplémentaire et quasi-totale contre l'anti-déversement par le dispositif antivol qui en est équipé, permettant d'éviter le déversement du liquide contenu dans le réservoir en cas de gîte, de renversement du véhicule ou de perte du bouchon.

L'obturateur de sécurité selon l'invention est formé par l'extrémité du tube escamotable de remplissage et une pièce mobile d'obturation venant fermer le passage de sortie du tube après le remplissage, cette pièce d'obturation étant reliée au bouchon de fermeture du réservoir.

Cette pièce mobile d'obturation remplit la fonction générale d'obturateur de sécurité. Elle pivote autour d'un axe excentré par rapport au centre de l'ouverture d'extrémité du tube escamotable de remplissage pour permettre son ouverture.

Elle assure ainsi une sécurité supplémentaire à l'anti-déversement.

En plus, d'une fabrication simple et peu onéreuse, l'obturateur de sécurité de par sa position permet de s'assurer que le tube escamotable de remplissage est rentré dans le dispositif antivol, anti-intrusion et anti-déversement avant la remise en place du bouchon de réservoir.

Il permet aussi d'éviter la perte du bouchon de réservoir.

Lorsque le tube escamotable de remplissage est en position sortie de remplissage, la pièce pivotante en position escamotée constitue un obstacle à la rentrée du tube escamotable de remplissage dans le corps tubulaire plongeur. Cette caractéristique oblige l'utilisateur à fermer et à rentrer le tube escamotable de remplissage dans le corps tubulaire plongeur du dispositif antivol avant de pouvoir fermer le réservoir avec le bouchon d'origine.

De plus, la pièce pivotante dans sa position rabattue assure le maintien du tube escamotable de remplissage en position haute.

Elle permet donc de s'assurer que le tube escamotable de remplissage est bien rentré dans le dispositif antivol, anti-intrusion et anti-déversement avant la remise en place du bouchon de réservoir.

La pièce pivotante est reliée mécaniquement au bouchon du réservoir par une liaison quelconque, un lien souple, rigide, semi-rigide, articulé ou autre, ce qui permet d'éviter la perte du bouchon. On peut citer l'exemple d'un fil ou d'une chaînette.

En outre, en manipulant le bouchon de réservoir, il est possible d'extraire le tube escamotable de remplissage hors du corps tubulaire plongeur ou de l'introduire dans ce dernier, et il est également possible de faire pivoter la pièce de l'obturateur de sécurité en ouverture ou en fermeture. Cette manipulation s'accomplit en ne touchant que la partie externe du bouchon de réservoir, c'est-à-dire une partie normalement propre et donc d'effectuer les manoeuvres précitées sans se salir au contact d'une pièce ou partie souvent souillée par du carburant.

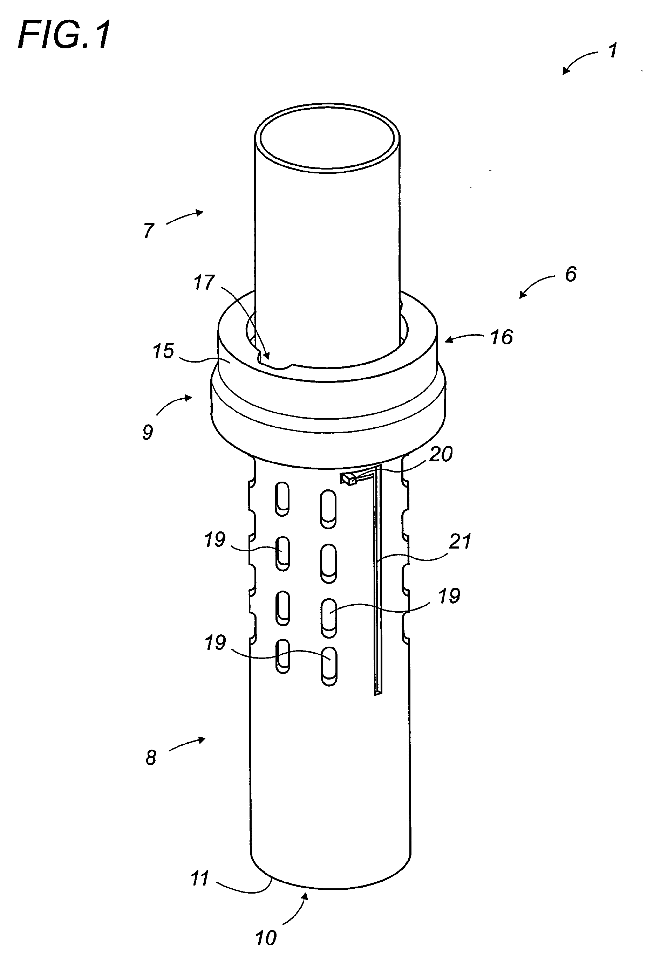

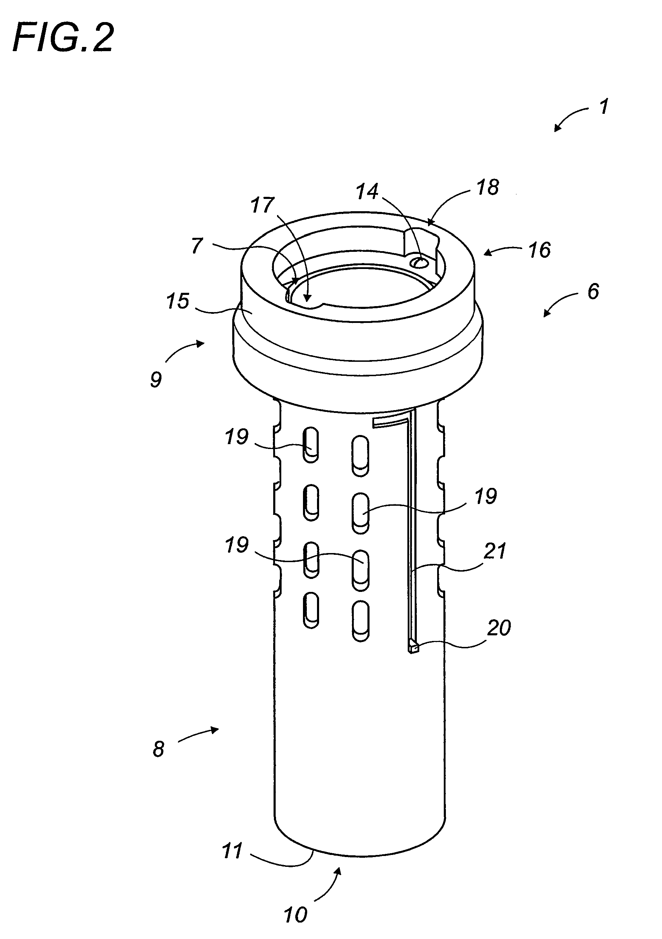

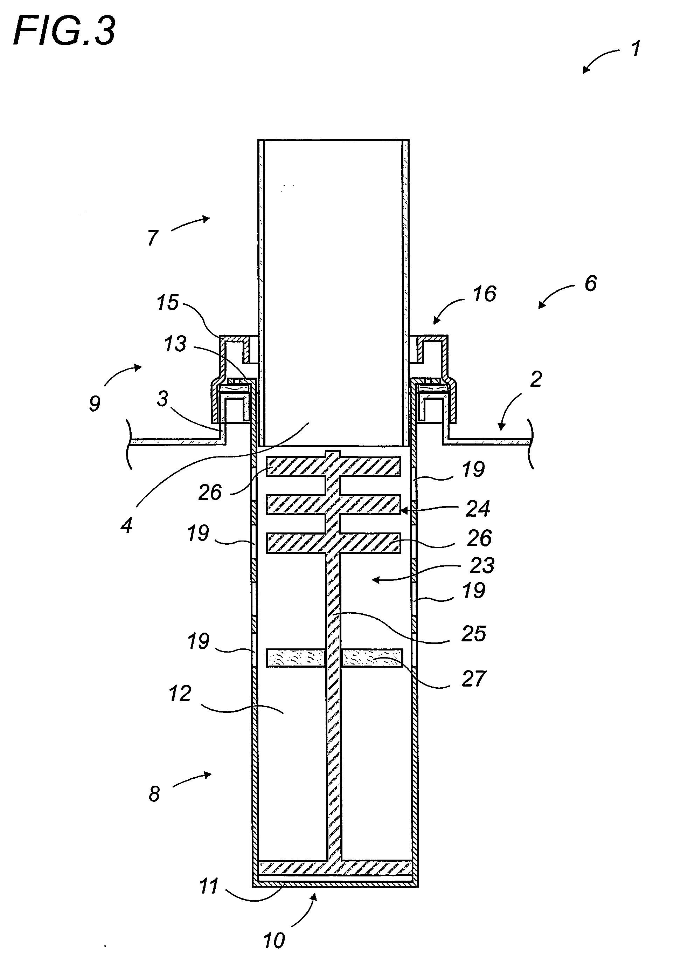

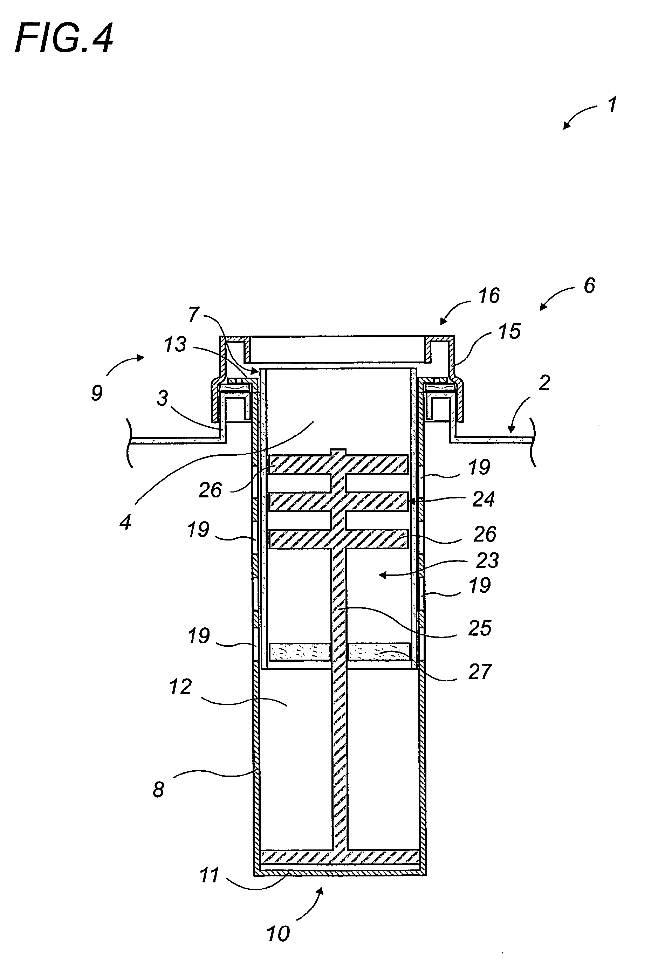

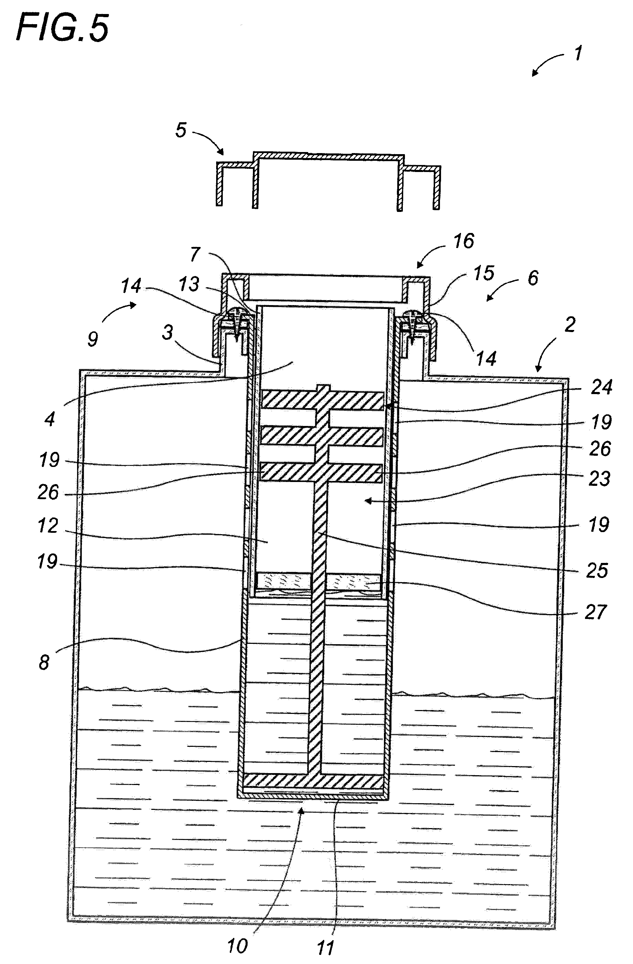

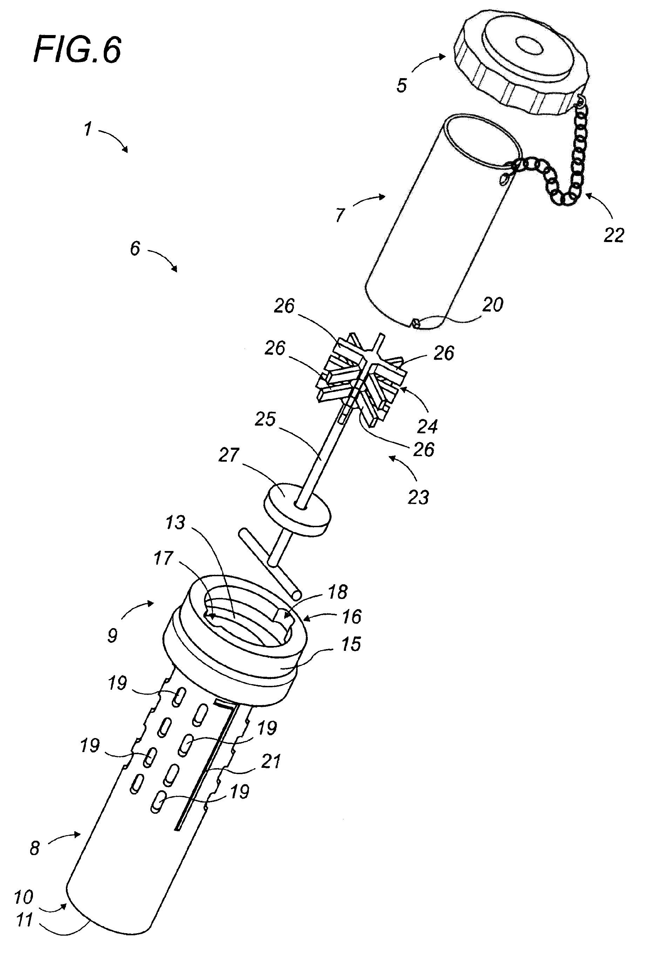

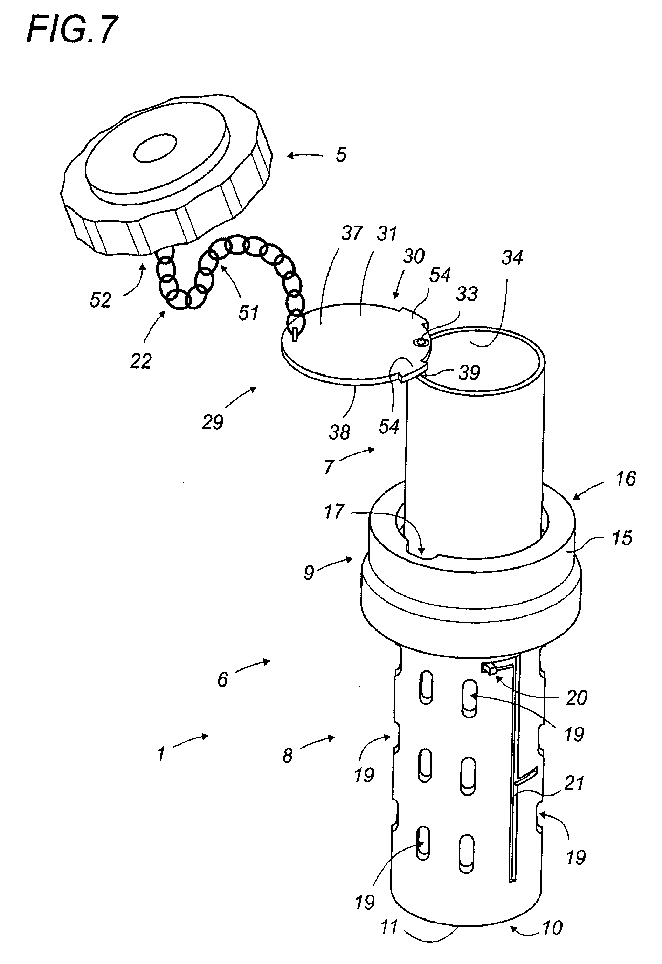

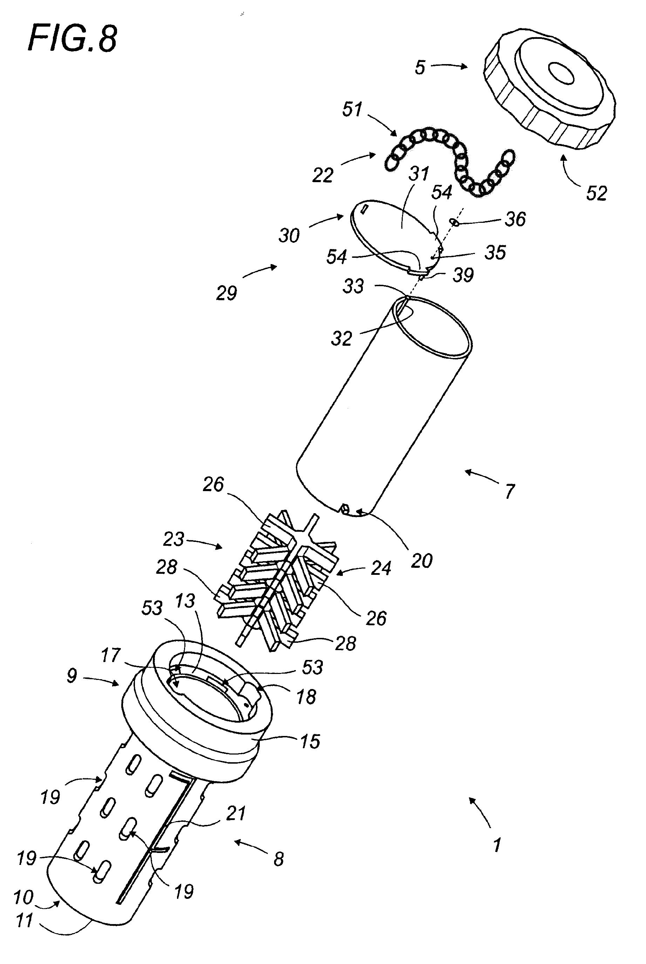

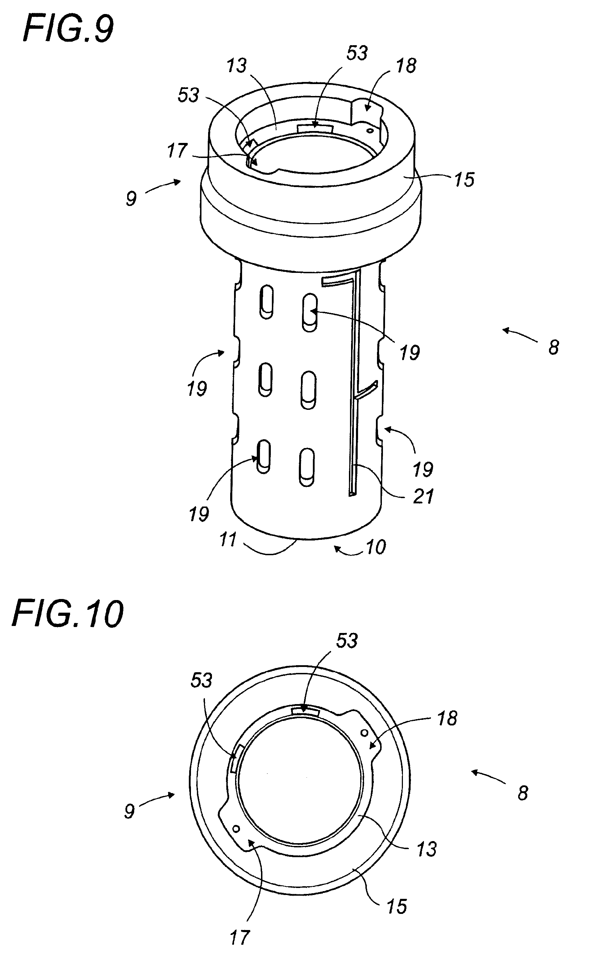

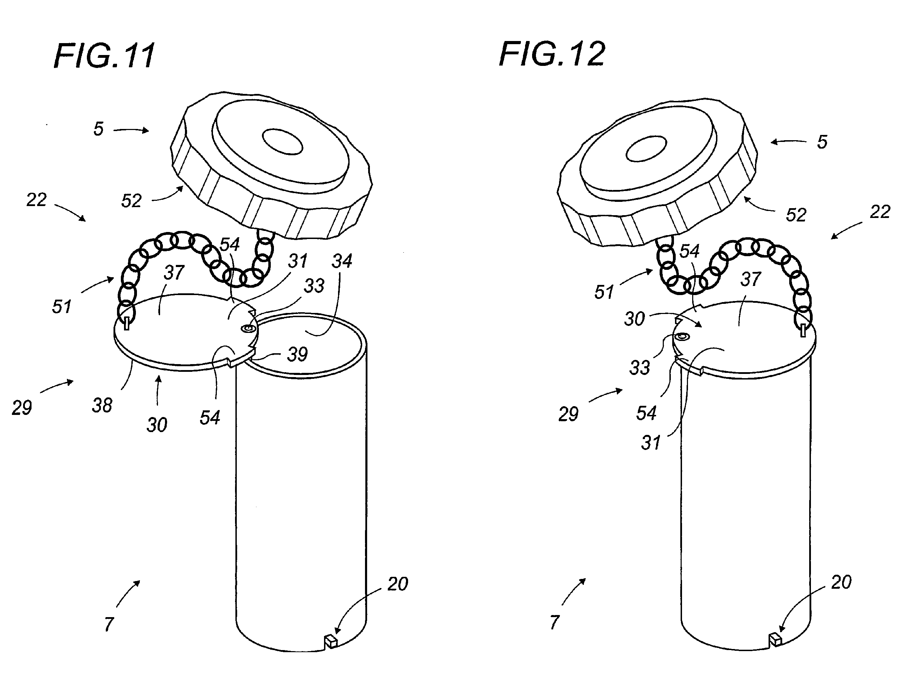

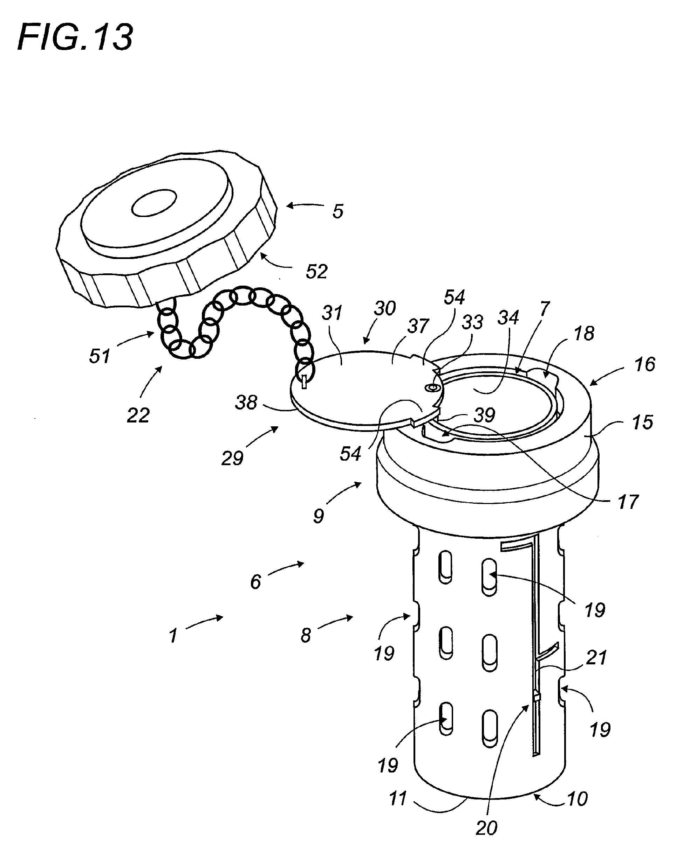

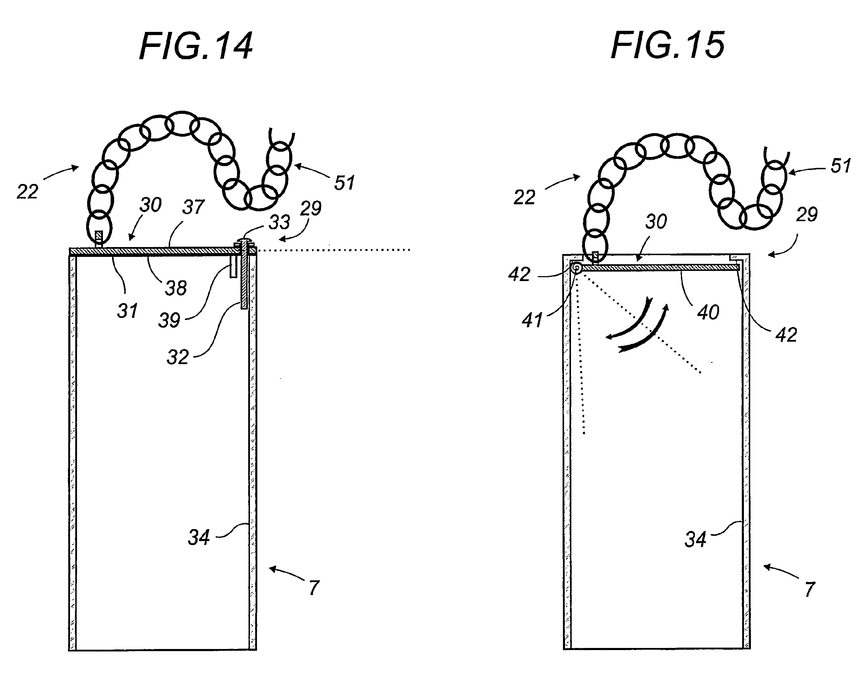

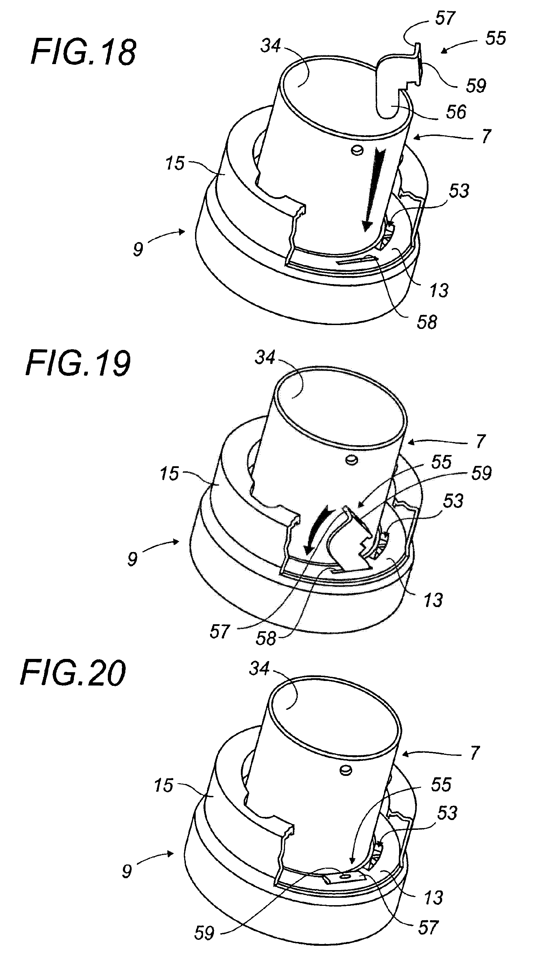

D'autres caractéristiques et avantages de l'invention apparaîtront à la lecture de la description détaillée qui va suivre, description faite en référence aux dessins annexés, dans lesquels :
. la figure 1 est une vue en perspective d'une première variante du dispositif selon l'invention en position relevée du tube escamotable de remplissage ;
. la figure 2 est une vue en perspective d'une première variante du dispositif selon l'invention en position abaissée du tube escamotable de remplissage ;
. la figure 3 est une vue en coupe longitudinale d'une première variante du dispositif selon l'invention en position relevée du tube escamotable de remplissage ;
. la figure 4 est une vue en coupe longitudinale de la première variante du dispositif selon l'invention en position abaissée du tube escamotable de remplissage ;
. la figure 5 est une vue schématique en coupe longitudinale de la première variante du dispositif selon l'invention monté sur le goulot d'un réservoir ;
. la figure 6 est une vue en perspective en éclaté de la première variante du dispositif selon l'invention à l'état partiellement dissocié ;
. la figure 7 est une vue en perspective d'une seconde variante du dispositif selon l'invention en position relevée du tube escamotable de remplissage avec l'obturateur de sécurité selon l'invention en position sortie de remplissage ;
. la figure 8 est une vue en perspective éclatée de la seconde variante du dispositif selon l'invention à l'état dissocié ;
. la figure 9 est une vue en perspective de la seconde variante du corps tubulaire plongeur ;
. la figure 10 est une vue de dessus de la seconde variante du corps tubulaire plongeur ;
. la figure 11 est une vue en perspective de la seconde variante du tube de remplissage avec une pièce mobile d'obturation selon une première variante en position ouverte ;
. la figure 12 est une vue en perspective de la seconde variante du tube de remplissage avec une pièce mobile d'obturation selon la première variante en position fermée ;
. la figure 13 est une vue en perspective de la seconde variante de l'obturateur de sécurité selon l'invention avec sa pièce mobile d'obturation reposant sur le rebord recevant le bouchon ;
. les figures 14 à 17 sont des vues en coupe longitudinale de différentes variantes de la pièce mobile d'obturation de la seconde variante du tube de remplissage ; et
. les figures 18 à 20 sont des vues en perspective représentant les étapes de l'introduction d'une pièce de blocage contre la rotation inverse du corps tubulaire plongeur du dispositif selon l'invention.

Le dispositif de sécurité selon la présente invention va maintenant être décrit de façon détaillée en référence aux figures 1 à 20. Les éléments équivalents représentés sur les différentes figures porteront les mêmes références numériques.

Sur les figures 1 et 3, on a représenté un dispositif antivol 1 pour réservoir de liquide en position ouverte. Ce dispositif antivol est monté sur un réservoir 2 de liquide et ajusté sur sa pièce de goulot 3 délimitant un orifice de remplissage 4 fermé par un bouchon 5.

Le dispositif antivol 1 comprend un ensemble coaxial plongeur 6 formé de deux éléments coaxiaux de préférence cylindriques et creux, à savoir un tube escamotable de remplissage 7 et un corps tubulaire plongeur 8, formant l'ensemble coaxial plongeur 6.

Le corps tubulaire plongeur 8 présente une extrémité supérieure 9 et une extrémité inférieure 10.

L'extrémité inférieure 10 du corps tubulaire plongeur 8 comporte préférentiellement une face terminale aveugle 11 obturée par une plaque de fermeture formant ainsi un volume inférieur 12 fermé à son extrémité inférieure 10, servant de volume réceptacle et de récupération d'objets ou d'un produit quelconque introduit suite à un geste de malveillance.

Dans un autre mode de réalisation de l'invention, l'extrémité inférieure 10 du corps tubulaire plongeur 8 peut cependant être ouverte afin de laisser passer le liquide.

L'extrémité supérieure 9 du corps tubulaire plongeur 8 est bordée d'une collerette de fixation 13 prévue pour être montée et immobilisée longitudinalement et bloquée en pivotement par vissage comme le bouchon sur la pièce 3 de goulot de l'orifice de remplissage 4 du réservoir 2 à la place du bouchon 5 de fermeture du réservoir. Cette collerette de fixation 13 est fixée sur la pièce de goulot 3 de l'orifice de remplissage 4 du réservoir par exemple par l'intermédiaire de vis inviolables telles que 14 afin de rendre difficile son démontage et son extraction.

La collerette de fixation 13 du corps tubulaire plongeur 8 est surmontée par une deuxième pièce de goulot en collerette d'extrémité 15 formant un nouveau goulot 16 pour l'orifice de remplissage 4 du réservoir 2 sur lequel s'adapte également le bouchon 5 d'origine du réservoir.

En effet, on utilise la même pièce de goulot que celle d'origine avec ses deux encoches d'entrée 17 et 18 dans chacune desquelles entre une languette-ressort équipant classiquement la sous face du bouchon de fermeture du réservoir. Cette deuxième pièce de goulot 15 est disponible dans le commerce en tant que pièce détachée. La pièce d'origine reste sur le goulot du réservoir car solidarisée par soudage à celui-ci alors que la nouvelle pièce de goulot est rapportée sur l'ancienne à travers la collerette de fixation. Elle présente les mêmes caractéristiques, propriétés et avantages. De plus, l'extrémité du goulot semble identique, vue à une certaine distance, à celle d'un réservoir non équipé du dispositif 1 selon l'invention.

Il peut ainsi s'agir de la même pièce ou d'une pièce analogue dont la jupe de la partie inférieure est agrandie progressivement par évasement ou totalement sur toute ou une fraction de sa longueur pour arriver à se monter sur la pièce de goulot d'origine garnie par la collerette de fixation 13 du tube plongeur 8.

Bien entendu, la pièce de goulot peut prendre différentes formes techniques selon les particularités du réservoir ou du constructeur sans pour autant affecter l'invention. On peut également en prévoir une spéciale qui caractérisera visuellement le réservoir équipé du dispositif 1 selon l'invention.

L'ensemble coaxial plongeur 6 est immobilisé en position sur la pièce de goulot d'origine par deux languettes-ressort diamétralement opposées équipant sa sous face et venant s'engager dans les encoches prévues à cet effet dans la pièce de goulot. L'immobilisation en pivotement est effective après enfoncement dans les encoches et un quart de tour par rapport à la pièce de goulot.

La pièce de goulot en collerette d'extrémité 15 est par exemple fixée contre la collerette de fixation 13 du corps tubulaire plongeur 8 à l'aide de points de soudure allégés ou d'un cordon de soudure plus faible, prévus pour céder sous une force mécanique d'effraction.

En effet, la pièce de goulot en collerette d'extrémité 15 présente une forme en saillie susceptible de servir de préhension pour l'arrachement du dispositif antivol 1 hors du goulot du réservoir. A l'aide d'une fixation prévue pour se rompre en cas de tentative d'extraction frauduleuse du dispositif antivol 1, seule cette pièce est arrachée.

On peut prévoir tout autre moyen de fixation fracturable de la collerette de fixation 13 contre la surface interne du corps tubulaire plongeur 8 dont la fonction serait sensiblement identique, le but étant, lors d'une tentative d'arrachage du dispositif antivol 1 de l'invention, que seule la pièce de goulot en collerette d'extrémité 15 soit arrachée et que le reste du dispositif antivol 1 reste sur le goulot du réservoir.

L'autre partie du dispositif antivol 1 reste sur le goulot du réservoir car montée sur le goulot du réservoir par l'extrémité supérieure 9 du corps tubulaire plongeur 8, et non pas par la pièce de goulot en collerette d'extrémité 15.

Sur une certaine longueur de sa surface latérale, le corps tubulaire plongeur 8 présente des ouvertures transversales telles que 19 plus ou moins grandes pour le passage du liquide. Ces ouvertures transversales 19 affectent la forme de perforations, de perçages, de fentes ou de toute autre forme adaptée au passage du liquide, découpées, enfoncées, percées ou perforées dans le métal de la paroi latérale du corps tubulaire plongeur 8. Dans le mode de réalisation représenté, ces ouvertures 19 sont de forme oblongue longitudinale ou sous la forme de perforations agrandies longitudinalement.

Le tube escamotable de remplissage 7 est un tube ouvert à ses deux extrémités. Il est monté à coulissement libre dans le tube plongeur 8 entre une position escamotée rentrée et une position sortie ou relevée de remplissage. Pour cette raison on l'appellera ci-après tube escamotable de remplissage 7.

Dans la position ouverte du réservoir représentée sur les figures 1 et 3, le tube escamotable de remplissage 7 est placé en position relevée hors de l'ensemble coaxial plongeur 6. Sa partie supérieure est ouverte et permet, par exemple, l'introduction et le maintien de l'extrémité d'un pistolet de distribution de liquide lors du remplissage du réservoir et l'écoulement du liquide à partir de son extrémité supérieure, c'est-à-dire à partir d'une entrée déportée vers l'extérieur.

Il sert surtout à permettre de maintenir l'extrémité du pistolet de remplissage au delà de l'orifice pour permettre un remplissage à ras bord sans difficulté.

Le tube escamotable de remplissage 7 présente une surface latérale continue. Il est monté à coulissement libre mais guidé, par exemple de manière étanche, dans le corps tubulaire plongeur 8. Ainsi, le tube escamotable de remplissage 7 présente un diamètre sensiblement inférieur à celui du corps tubulaire plongeur 8 qui délimite un volume cylindrique récepteur dans lequel vient se loger le tube escamotable de remplissage lorsqu'il est en position escamotée.

Un moyen de maintien en position, par exemple du type quart de tour à baïonnette ou autre, permet l'immobilisation du tube escamotable de remplissage 7 en position relevée puis sa libération.

Dans un mode de réalisation préféré, le tube escamotable de remplissage 7 est verrouillé en position fermée ou ouverte en le tournant d'un quart de tour. Son immobilisation en position haute provient d'un ergot 20 en saillie de sa surface latérale dans sa partie inférieure qui coulisse à guidage, dans une fente longitudinale de guidage 21 en forme de L inversé, découpée dans la surface latérale du corps tubulaire plongeur 8. La barre verticale de la fente en L guide ainsi le coulissement vertical longitudinal du tube escamotable de remplissage 7 le long du corps tubulaire plongeur 8, tandis que la barre horizontale de la fente de guidage 21 permet après son pivotement, une immobilisation en position haute du tube escamotable de remplissage 8. Cette barre verticale de la fente en L peut présenter une ou plusieurs fentes supplémentaires permettant d'autres positions d'immobilisation du tube escamotable de remplissage 8.

La course de l'ergot 20 correspond à la longueur de la fente de guidage 21, ce qui empêche la sortie totale du tube escamotable de remplissage hors du dispositif 1 en marquant une position limite haute.

Le diamètre du corps tubulaire plongeur 8 et du tube escamotable de remplissage 7 doivent être prévus de sorte que l'espace libre entre eux soit le plus faible possible, afin que lorsque le tube escamotable de remplissage 7 est escamoté dans le corps tubulaire plongeur 8, le liquide dans le réservoir 2 ne puisse pas pénétrer à travers les ouvertures transversales 19.

Lors du remplissage du réservoir 2, le tube escamotable de remplissage 7 est sorti du corps tubulaire plongeur 8 afin de former un tube de liaison pour le remplissage. Le liquide peut être introduit dans le réservoir 2 par l'ouverture supérieure de ce tube servant de canal de déversement dans le réservoir. Le liquide traverse les ouvertures transversales 19 du corps tubulaire plongeur 8 pour remplir le réservoir.

Préférentiellement, le tube escamotable de remplissage 7 comporte un moyen de préhension (non représenté), par exemple sous la forme d'une poignée ou d'une anse rabattable ou autre moyen, pour sa préhension et son levage hors de son logement jusqu'à la mise en butée haute contre le rebord d'appui de la pièce de goulot correspondant à sa position relevée.

On peut aussi prévoir un lien filaire, à chaînette ou autre 22 le reliant au bouchon 5 du réservoir comme représenté sur la figure 6 afin de le saisir et d'éviter la perte du bouchon.

Selon une autre variante non représentée, il peut être prévu un moyen, par exemple à ressort, provoquant automatiquement la sortie du tube escamotable de remplissage, par exemple lorsque le bouchon du réservoir est enlevé.

Le dispositif antivol et anti-déversement pour réservoir de liquide 1 selon l'invention est représenté sur les figures 2 et 4 en position fermée. Dans cette position, le tube escamotable de remplissage 7 se trouve à l'intérieur de l'ensemble coaxial plongeur 6. Ses parois externes arrivent donc en contact avec les parois internes du corps tubulaire plongeur 8, empêchant ainsi le liquide de s'écouler par les ouvertures 19 existant dans cette enveloppe.

Préférentiellement, dans cette position fermée, le tube escamotable de remplissage 7 est presque totalement logé dans l'ensemble coaxial plongeur 6. Seul le moyen de préhension du type poignée, anse, lien ou autre, fait saillie dans le goulot ou est rabattu dans celui-ci afin de pouvoir être saisi pour permettre la sortie partielle du tube escamotable de remplissage hors de son logement.

Selon une variante plus complète de l'invention, le tube escamotable de remplissage peut également renfermer un dispositif anti-pénétration 23 ayant pour but de permettre au liquide de s'écouler tout en empêchant l'introduction d'un conduit notamment souple ou de tout autre moyen permettant de siphonner le réservoir.

Dans un premier mode de réalisation préféré de cette variante, représenté sur les figures 3 à 6, le dispositif anti-pénétration 23 comprend un ensemble obturateur 24 se développant autour d'une tige support 25 sensiblement longitudinale, solidarisée à la paroi interne du tube plongeur 8 et distante de celle-ci, de manière à se trouver sensiblement en position centrale longitudinale. Cette tige support porte l'ensemble obturateur 24 qui peut se présenter par exemple sous la forme d'une pièce ou d'une pluralité de pièces d'obturation 26 constituant un ensemble obturateur anti-pénétration formé par exemple par la superposition décalée angulairement de pièces d'obturation 26 en étoiles, à ailettes, à palettes radiales droites ou incurvées alternativement dans un sens puis dans l'autre ou de tout autre forme, par exemple en chicanes ou avec des chicanes, rendant difficile, voire impossible l'introduction d'un conduit de siphonnage du réservoir, mais permettant le passage du liquide avec un certain débit lors du remplissage.

L'ensemble obturateur 24 est conformé de manière à laisser libre un chemin ou plusieurs voies permettant l'écoulement naturel ou forcé du liquide, mais se trouve être trop anguleux, complexe et en chicanes pour rendre difficile, voire impossible l'insertion d'un conduit quelconque même souple de siphonnage. Un exemple de réalisation d'un tel ensemble obturateur a été représenté en perspective sur la figure 6. Bien d'autres formes techniques sont possibles pour la même fonction générale et les mêmes résultats.

Ce dispositif anti-pénétration rend particulièrement difficile voire impossible toute introduction d'un conduit ou moyen similaire même souple et de faible section vers les ouvertures traversantes 19, ce qui empêche tout siphonnage, même du volume supérieur du réservoir.

L'ensemble obturateur 24 peut ne pas être aussi long que la hauteur de la zone des ouvertures 19. La tige support 25 peut comporter un flotteur 27 monté à coulissement libre sur la tige comme représenté, de façon à mieux condamner encore l'accès à la partie inférieure du tube plongeur 8.

Dans un second mode de réalisation préféré de cette variante, représenté sur la figure 8, le dispositif anti-pénétration 23 comprend également un ensemble obturateur 24 formé par exemple par la superposition décalée angulairement de pièces d'obturation 26, 28. Dans ce second mode de réalisation, l'ensemble obturateur 24 est solidarisé au tube plongeur 8 par une ou plusieurs pièces d'obturation 28 de plus grande longueur dont l'extrémité libre est solidarisée à la paroi interne du tube plongeur 8.

Dans un autre mode de réalisation de cette variante, l'ensemble obturateur 24 peut être réalisé d'une autre façon, par exemple sous la forme d'un ensemble perméable aux liquides sous pression et impénétrable par un conduit même souple.

On peut citer à cet effet comme exemple un amas de rubans métalliques, une pièce transpercée selon des conduits internes déviés, des chicanes, des pièces avec passages déportés, des enchevêtrements de rubans, de tiges ou autres éléments constituant autant d'obstacles successifs à la pénétration d'un conduit de siphonnage.

Dans les deux variantes ci-dessus, lorsque l'ensemble obturateur 24 comporte des pièces d'obturation 26, 28 superposées et décalées angulairement, une bague de support et de renfort peut être montée par exemple dans la partie supérieure de l'ensemble obturateur 24 autour des pièces d'obturation 26, 28 afin d'empêcher que ces dernières puissent être forcées ou tordues par un outil extérieur, par exemple un tournevis. Une telle bague de support peut servir à la fois à rigidifier les pièces d'obturation 26, 28 et à empêcher l'introduction d'un outil entre les pièces d'obturation 26, 28 et la surface interne du tube plongeur 8.

Une telle bague de support est généralement soudée contre la paroi interne du tube plongeur 8.

Dans le cas où les pièces d'obturation 26, 28 sont sous la forme d'ailettes disposées en étoiles à six branches, la bague de support peut présenter une forme hexagonale dont le diamètre interne le plus grand est sensiblement supérieur au plus grand diamètre externe des pièces d'obturation 26, 28.

Selon une autre variante de l'invention, non représentée, le tube escamotable de remplissage peut également renfermer un clapet anti-déversement mobile et monté à coulissement libre dans le tube escamotable de remplissage de façon à venir porter en appui d'étanchéité, contre une sous face de butée que présente le dispositif anti-pénétration 23 lors d'une montée du liquide dans le tube escamotable de remplissage 7. Cette fonction peut être remplie par le flotteur 27 représenté sur la figure 7 ou par toute autre pièce mobile d'obturation avec ou sans ensemble obturateur 24.

Ainsi, dans un mode de réalisation préféré de cette variante, combinant ces deux dernières alternatives, la même tige support 25 peut en même temps comporter le dispositif anti-pénétration 23 et porter plus haut à coulissement libre le clapet anti-déversement. Ainsi, lorsque le réservoir est plein ou en cours de remplissage, ce clapet anti-déversement à flotteur monté à coulissement libre mais guidé dans le tube escamotable de remplissage vient se plaquer de manière étanche contre la sous face du dispositif anti-pénétration 23 lors d'une montée de liquide dans le tube escamotable de remplissage. On rend ainsi impossible tout débordement de liquide hors du réservoir lors du remplissage et on empêche tout déversement de liquide hors du réservoir suite à un refoulement ou autre cause.

En plus ou en remplacement du clapet anti-déversement, il est également possible d'envisager un autre dispositif assurant entre autres une fonction anti-déversement.

Ainsi, selon une seconde variante essentielle de l'invention, le tube escamotable de remplissage 7 possède un obturateur de sécurité 29 comportant une pièce mobile d'obturation 30.

En position fermée, la pièce mobile d'obturation 30 assure la fermeture de l'ouverture supérieure du tube escamotable de remplissage 7 et de celle du corps tubulaire plongeur afin de fermer leur passage de sortie.

La pièce d'obturation est mobile de différentes façons.

Dans un premier mode de réalisation préféré de cette variante de l'invention, représenté sur les figures 7 à 14, la pièce mobile d'obturation 30 est une pièce montée pivotante 31 autour d'un axe longitudinal à la manière d'un obturateur de sécurité pivotant.

Une telle pièce montée pivotante 31 comporte une pièce plate de forme similaire à celle de l'ouverture supérieure du tube escamotable de remplissage 7. Il s'agit ici préférentiellement d'un disque présentant un diamètre sensiblement supérieur à celui de l'ouverture supérieure du tube escamotable de remplissage 7.

Dans ce premier mode de réalisation, la pièce mobile d'obturation 30 est montée pivotante autour de l'axe longitudinal décentré par rapport au tube escamotable de remplissage 7, cet axe étant préférentiellement une tige métallique 32 traversant la pièce pivotante 31 et à tête élargie 33 du type tête de rivet contre la surface interne 34 du tube escamotable de remplissage 7.

Afin que la pièce mobile d'obturation 30 reste liée au tube escamotable de remplissage 7, la partie supérieure de la tige métallique 32 présentant la tête de maintien 33 est de diamètre supérieur à celui du perçage 35 de la pièce mobile d'obturation 30. Dans un mode de réalisation préféré de l'invention, une rondelle métallique 36 peut être logée entre la tête de maintien 33 de la tige métallique 32 formant l'axe de pivotement et la face supérieure 37 de la pièce mobile d'obturation 30.

Selon le premier mode de réalisation préféré de cette variante de l'invention, la face inférieure 38 de la pièce mobile d'obturation 30 comporte une butée en saillie 39, préférentiellement sous la forme d'un ergot vertical, servant de butée d'arrêt lors du pivotement en ouverture et en fermeture de la pièce mobile d'obturation 30. Cette butée en saillie 39 est montée à proximité du pourtour de la pièce mobile d'obturation 30 et de la tige métallique 32 de sorte que lors du pivotement en ouverture ou en fermeture de la pièce mobile d'obturation 30, celle-ci vienne en butée contre la paroi interne 34 du tube escamotable de remplissage 7 lorsque la pièce mobile d'obturation 30 est en position de fermeture, ou lorsqu'elle est pivotée en position maximale d'ouverture.

Lors du pivotement de la pièce mobile d'obturation 30 et de la sortie du tube escamotable de remplissage 7, la butée en saillie 39 permet de bloquer la pièce mobile d'obturation 30 dans une position dans laquelle l'ouverture du tube escamotable de remplissage 7 est maximale.

Lors du pivotement de la pièce mobile d'obturation 30 et de l'introduction du tube escamotable de remplissage 7 dans le corps tubulaire plongeur 8, la butée en saillie permet de bloquer la pièce mobile d'obturation 30 dans une position dans laquelle l'ouverture du tube escamotable de remplissage 7 est complètement obturée par la pièce mobile d'obturation 30. Dans ce cas, la butée en saillie 39 permet de s'assurer que la pièce mobile d'obturation 30 est bien en place et assure parfaitement son rôle anti-déversement.

Lorsque la pièce mobile d'obturation 30 est pivotée de manière à laisser libre l'ouverture du tube escamotable de remplissage 7, comme représenté sur la figure 13, elle est déportée sur le côté du tube escamotable de remplissage 7 et empêche donc un éventuel retrait de celui-ci dans le corps tubulaire plongeur 8 et la mise en place du bouchon de réservoir 5. Ceci permet de s'assurer que le tube escamotable de remplissage 7 est bien rentré dans le corps tubulaire plongeur 8 après le remplissage et avant la remise en place du bouchon de réservoir 5.

Dans un second mode de réalisation de cette variante de l'invention, représenté sur la figure 15, la pièce mobile d'obturation 30 est une pièce 40 montée pivotante autour d'un axe transversal 41 au tube escamotable de remplissage 7 à la manière d'un volet. Dans ce mode de réalisation, une force de rappel maintient la pièce mobile d'obturation 30 en position de fermeture vers le haut contre un rebord 42 formant un épaulement intérieur pour le tube escamotable de remplissage 7 qui sert de siège pour la pièce mobile d'obturation 30.

Selon ce second mode de réalisation de cette variante de l'invention, l'ouverture de la pièce mobile d'obturation 30 peut s'effectuer par l'introduction du pistolet distributeur de carburant lors du remplissage du réservoir.

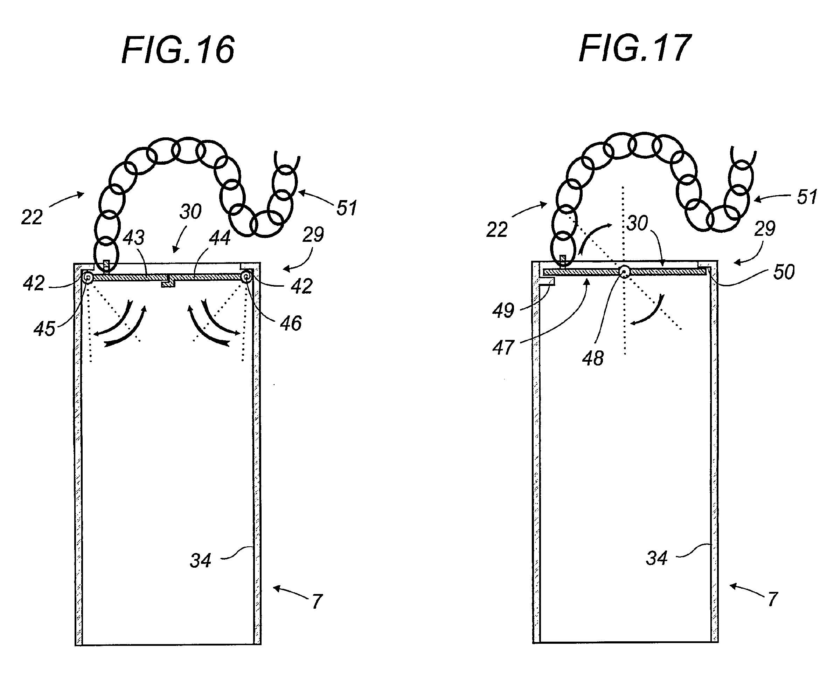

Dans un troisième mode de réalisation de cette variante de l'invention, représenté sur la figure 16, la pièce mobile d'obturation 30 est formée de deux pièces en vis-à-vis 43, 44 montées chacune pivotantes autour d'un axe transversal 45, 46 au tube escamotable de remplissage 7 respectivement et à la manière de deux volets. Dans ce mode de réalisation, une force de rappel maintient chacune des deux pièces pivotantes 43, 44 en position de fermeture vers le haut, contre un rebord 42 formant un épaulement intérieur pour le tube escamotable de remplissage 7 et qui sert de siège pour les deux pièces 43, 44 de la pièce mobile d'obturation 30.

Dans ce mode de réalisation, une conformation en décrochement assure une étanchéité entre les deux pièces pivotantes.

Dans un quatrième mode de réalisation de cette variante de l'invention, représenté sur la figure 17, la pièce mobile d'obturation 30 est une pièce 47 montée pivotante autour d'un axe transversal 48 central au tube escamotable de remplissage 7 à la manière d'un papillon. Une force de rappel maintient la pièce mobile d'obturation 30 en position de fermeture contre un rebord intérieur en demi-cercle 49 et un rebord extérieur en demi-cercle 50 formant un épaulement intérieur pour le tube escamotable de remplissage 7 et qui sert de butée d'appui pour la pièce mobile d'obturation 30.

De manière générale, quel que soit le mode de réalisation de cette variante de l'invention, l'extrémité supérieure du tube escamotable de remplissage 7 peut présenter un ou plusieurs rebord(s), formant un épaulement intérieur servant de siège à la pièce mobile d'obturation 30 dans sa position de fermeture.

Préférentiellement, la pièce mobile d'obturation 30 peut être une pièce rabattable et/ou une pièce amovible intérieure ou extérieure.

La pièce mobile d'obturation 30 est reliée de façon indissociable au bouchon du réservoir 5 par une liaison quelconque. Il peut s'agit d'un lien préférentiellement souple et déformable. Ce lien souple et déformable est plus préférentiellement un lien filaire ou articulé 22.

Dans un mode de réalisation préféré de cette variante de l'invention, le lien 22 est une chaînette métallique 51 dont l'extrémité inférieure est solidarisée contre la face supérieure 37 de la pièce mobile d'obturation 30 alors que son extrémité supérieure est solidarisée à la face inférieure 52 du bouchon de réservoir.

Dans le premier mode de réalisation de cette variante de l'invention, le lien souple et déformable 22 est fixé sur la face supérieure 37 de la pièce mobile d'obturation 30 à proximité du bord de celle-ci, et sensiblement en vis-à-vis de la tête de maintien 33 de la tige 32.

Le bouchon du réservoir 5, par l'intermédiaire du lien souple et déformable 22, sert de moyen de préhension pour permettre l'ouverture du tube escamotable de remplissage 7 par pivotement de la pièce mobile d'obturation 30 et pour permettre le levage du tube escamotable de remplissage 7 en sortie hors de son logement jusqu'à son verrouillage par quart de tour à baïonnette ou autre correspondant à sa position relevée.

Le lien souple et déformable 22, outre sa fonction de transmission du mouvement de déport, sert également à éviter la perte du bouchon de réservoir 5.

Une fois en place sur l'ouverture supérieure du tube escamotable de remplissage 7 et celle du corps tubulaire plongeur 8, comme représenté sur les figures 12 et 14 à 17, la pièce mobile d'obturation 30 assure une sécurité anti-déversement supplémentaire, même en cas de perte de bouchon 5 malgré son raccordement à celle-ci, elle empêche la sortie du liquide.

Dans une variante de ce mode de réalisation préféré de l'invention, la partie supérieure de la collerette de fixation 13 du corps tubulaire plongeur présente un ou plusieurs passages traversants 53 permettant de faire retomber dans le réservoir 2, du carburant éventuellement présent dans le volume supérieur du corps tubulaire plongeur 8 sur la face supérieure de la collerette de fixation 13. En effet, en cas de maladresse de la part de l'utilisateur, il peut arriver que du carburant coule à l'extérieur du tube escamotable de remplissage 7 et retombe dans la partie supérieure de la collerette de fixation 13 du corps tubulaire plongeur 8.

Dans cette variante, la pièce mobile d'obturation 30 présente sur son pourtour un ou plusieurs prolongements périphériques 54 prévus pour recouvrir les orifices traversants 53 de la partie supérieure de la collerette de fixation 13 du corps tubulaire plongeur 8 lorsque la pièce mobile d'obturation 30 est en positon de fermeture sur le passage de sortie du corps tubulaire plongeur 8 et celui du tube escamotable de remplissage 7. A cet effet, les prolongements périphériques 54 de la pièce mobile d'obturation 30 présentent une forme similaire à celle des orifices traversants 53 de la partie supérieure de la collerette 13 avec une surface légèrement supérieure à celle de ces derniers.

Ainsi, dans cette variante, lors de la sortie du tube escamotable de remplissage 7 hors du corps tubulaire plongeur 8 par l'intermédiaire du lien souple et déformable 22, la pièce mobile d'obturation 30 est soulevée et les orifices traversants 53 de la partie supérieure de la collerette de fixation 13 du corps tubulaire plongeur 8 sont libérés, ce qui permet à la quantité de carburant éventuellement collectée à ce niveau de retourner vers le réservoir 2 à travers ceux-ci. De même, lorsque le tube escamotable de remplissage 7 est remis en place dans le corps tubulaire plongeur 8 et que la pièce mobile d'obturation 30 recouvre leur ouverture supérieure respective et, les prolongements périphériques 54 de la pièce mobile d'obturation 30 viennent recouvrir les orifices traversants 53 de la partie supérieure de la collerette de fixation 13 afin d'éviter tout déversement de liquide à travers ceux-ci depuis le réservoir 2.

On peut utiliser la pièce mobile d'obturation 30 pour maintenir le tube escamotable de remplissage 7 en position quasi sortie, comme représenté sur la figure 13. En effet, en la faisant pivoter contre le rebord de la pièce de goulot en collerette d'extrémité 15 du corps tubulaire plongeur 8 recevant le bouchon 5, elle constitue un moyen d'arrêt en coulissement vers le bas du tube escamotable de remplissage 7. De plus, son rabattement est nécessaire pour descendre le tube escamotable de remplissage 7.

En se référant aux figures 6 et 8 qui représentent en perspective des variantes essentielles du dispositif 1 selon l'invention à l'état partiellement dissocié, nous allons maintenant décrire un exemple de mise en place et d'utilisation d'un dispositif antivol et anti-déversement pour réservoir de liquide 1 selon l'invention.

La mise en place du dispositif 1 selon l'invention s'effectue selon les étapes suivantes :
- retrait du bouchon 5 d'origine du réservoir ;
- introduction du dispositif 1 selon l'invention dans l'orifice de remplissage du réservoir 2 sensiblement selon un axe perpendiculaire au plan de l'ouverture du réservoir ;
- positionnement de la collerette de fixation 13 du corps tubulaire plongeur 8 sur la pièce de goulot de l'orifice de remplissage du réservoir ;
- immobilisation de la collerette de fixation 13 du corps tubulaire plongeur 8 sur la pièce de goulot d'origine par rotation d'un quart de tour de la collerette ;
- vérification de la qualité de l'immobilisation du dispositif 1 selon l'invention sur la pièce de goulot d'origine de l'orifice de remplissage ;
- fixation de la collerette de fixation 13 du corps tubulaire plongeur sur la pièce de goulot d'origine à l'aide de vis inviolables 14 ou autre moyen ;
- montage de la nouvelle pièce de goulot 15 sur l'ensemble formé de la pièce de goulot d'origine et de la collerette de fixation 13 ;
- remise en place du bouchon 5 d'origine du réservoir.

Une fois mis en place, le dispositif 1 ne peut pas être retiré sans abîmer le réservoir 2.

Dans une variante supplémentaire de l'invention, représentées sur les figures 18 à 20, la collerette de fixation 13 de l'extrémité supérieure 9 du corps tubulaire plongeur 8 peut être bloquée en pivotement sur la pièce de goulot 3 du réservoir 2 à l'aide d'une pièce de blocage 55. Cette pièce de blocage 55 se présente sous la forme d'une patte à extrémité arrondie 56 et dont l'extrémité opposée présente un rebord de calage 57 en saillie, se prolongeant de manière perpendiculaire par rapport au corps de la patte.

Comme cela peut-être vu sur les figures 18 à 20, qui représentent les étapes de mise en place de la pièce de blocage 55, l'extrémité arrondie 56 de la pièce de blocage 55 est introduite dans une fente 58 à travers la collerette de fixation 13 de l'extrémité supérieure 9 du corps tubulaire plongeur 8, puis basculée à 90° jusqu'à ce que le rebord de calage 57 de la pièce de blocage 55 vienne en contact contre la surface supérieure de la collerette de fixation 13.

Ainsi mise en place, la pièce de blocage 55 bloque la rotation inverse du corps tubulaire plongeur 8, ce qui empêche le retrait du dispositif 1 de l'invention hors du goulot 3 de l'orifice du réservoir 2.

Afin d'accroître l'inviolabilité de l'ensemble, la pièce de blocage 55 peut en outre être fixée, par exemple rivetée, pour être maintenue en place, au moyen d'un rivet introduit à travers un perçage 59 du rebord de calage 57 et un perçage sous-jacent du goulot 3 de l'orifice du réservoir 2.

L'utilisation du dispositif selon l'invention lors d'un remplissage de réservoir se fait selon les étapes suivantes :
- retrait du bouchon 5 d'origine du réservoir ;
- libération du tube escamotable de remplissage 7 ;
- relevage du tube escamotable de remplissage 7 hors du corps tubulaire plongeur 8 à l'aide du moyen de préhension ou du bouchon 5 relié au tube escamotable de remplissage 7 par un lien souple et déformable 22 ;
- immobilisation en butée haute du tube escamotable de remplissage 7 hors du corps tubulaire plongeur 8 par un quart de tour ;
- remplissage du réservoir 2 avec le pistolet de distribution en position haute dans le tube escamotable de remplissage 7 ;
- rentrée du tube escamotable de remplissage 7 dans le corps tubulaire plongeur 8 ;
- remise en place du bouchon 5 d'origine du réservoir.

Lors du remplissage du réservoir 2, le tube escamotable de remplissage 7 sert de guide, de canal, de prolongateur vers l'extérieur et de conduit pour l'introduction du liquide à partir d'une entrée de liquide déportée. Il permet de garder pendant tout le remplissage l'extrémité du pistolet en position haute pour un remplissage complet. En cas de moussage ou de trop plein, la butée du clapet anti-déversement à flotteur contre le dispositif anti-pénétration évite tout débordement et déversement du liquide.

Il est à noter que les éléments constitutifs du dispositif de l'invention doivent être fabriqués dans une matière adaptée. Cette matière doit être suffisamment rigide et résister à la force et la poussée du liquide contenu dans le réservoir. Dans le cas d'un réservoir de carburant, on peut par exemple fabriquer les éléments du dispositif antivol et anti-déversement en acier inoxydable ou en un plastique rigide résistant aux hydrocarbures.

On remarquera que le dispositif selon l'invention, dans ses modes de réalisation préférés, répond parfaitement aux exigences citées plus haut.

D'autres modes de réalisation pourront être envisagés par l'homme du métier sans s'écarter du principe général de l'invention.

On a décrit un dispositif antivol et anti-déversement de forme préférentiellement cylindrique. Ceci est apparu plus adapté, en raison par exemple de la forme habituellement cylindrique des ouvertures de réservoir, mais il peut être envisagé d'autres formes adaptées. Ainsi, on peut par exemple utiliser des éléments à section carrée, polygonale, ovale ou autre sans s'écarter du principe général de l'invention.

En outre, on pourra imaginer ultérieurement divers perfectionnements au dispositif de l'invention sans pour cela sortir du cadre de la protection définie par les revendications.

On peut par exemple envisager d'adapter un ressort entre le tube escamotable et l'enveloppe cylindrique interne afin de constituer une force de rappel en fermeture pour le tube ou au contraire afin de constituer une force de poussée faisant sortir le tube escamotable hors du corps tubulaire plongeur lors du retrait du bouchon du réservoir ou les deux à la fois.

Il peut également être envisagé d'adapter une jauge au dispositif, par exemple en utilisant le déplacement du flotteur 27 du clapet anti-déversement. On peut aussi adapter un système d'alarme au dispositif de l'invention afin de signaler toute tentative d'effraction et de siphonnage du réservoir.

En outre, afin d'accroître encore la sécurité du dispositif, on peut envisager de monter un détecteur de présence du pistolet dans le dispositif antivol, anti-intrusion et anti-déversement de l'invention, ce détecteur de présence autorisant ou non le déclenchement du remplissage.

Enfin, ce dispositif antivol et anti-déversement est conçu pour des réservoirs de liquides. Cette application ne doit cependant pas être restrictive et le dispositif pourra être utilisé dans d'autres domaines et applications moyennant quelques adaptations simples évidentes pour l'homme du métier. On peut par exemple adapter le dispositif de l'invention à des contenants de fluide, de matière pulvérulente, semi-liquide, visqueuse, pâteuse ou granulaire.

## Revendications

1. Dispositif antivol, anti-intrusion et anti-déversement pour un réservoir de liquide notamment de carburant, comprenant un corps tubulaire plongeur (8) introduit dans le réservoir par son orifice de remplissage à pièce de goulot et fixé sur celle-ci,
qui se compose d'un ensemble coaxial plongeur (6) formé de deux tubes cylindriques comprenant un tube plongeur (8) et un tube escamotable de remplissage (7) monté coulissant dans le tube plongeur (8), mobile entre une position rentrée d'anti-déversement et une position sortie de remplissage dans laquelle il fait saillie à l'extérieur et sert de conduit externe de remplissage,
le tube plongeur (8) comporte dans sa surface latérale sur une certaine hauteur au niveau de son extrémité supérieure, une série d'ouvertures (19) pour le passage du liquide, notamment du carburant, lors du remplissage délimitant un volume supérieur de remplissage en communication fluidique avec le réservoir (2),
le tube plongeur (8) comporte vers le bas, à la suite du volume supérieur, un volume inférieur (12) fermé au moins sur sa surface latérale,
l'ensemble coaxial plongeur (6) venant se monter dans le réservoir (2) et sur la pièce de goulot d'origine (3) en se fixant sur celle-ci à la place du bouchon de fermeture, pour qu'une deuxième pièce de goulot (15) forme un nouvel orifice de remplissage sur lequel peut être adapté le bouchon du réservoir, **caractérisé en ce que**
le tube plongeur (8) comporte à son extrémité supérieure une collerette de fixation (13) formant un appui sur l'orifice du réservoir, et la deuxième pièce de goulot (15) est fixée contre la collerette de fixation (13).

2. Dispositif selon la revendication 1 **caractérisé en ce que** le volume inférieur est fermé en partie inférieure pour servir de collecte et de récupération d'objets ou de produits introduits par le goulot de remplissage du réservoir, et pour former entre les deux volumes une limite de prélèvement par un conduit qui serait introduit de force par le goulot dans le dispositif antivol.

3. Dispositif selon la revendication 1 ou 2 **caractérisé en ce que** le volume de l'ensemble coaxial plongeur (6) en communication fluidique avec le volume interne du réservoir est occupé par un dispositif anti-pénétration (23).

4. Dispositif selon la revendication précédente **caractérisé en ce que** le dispositif anti-pénétration (23) de l'ensemble coaxial plongeur (6) est un ensemble d'obturation équipé d'un obturateur (24) rendant difficile l'accès aux ouvertures traversantes (19).

5. Dispositif selon la revendication précédente **caractérisé en ce que** l'ensemble obturateur (24) est un ensemble formé d'au moins une, voire plusieurs pièce(s) d'obturation (26) à branches radiales, chacune des pièces étant montée superposées sur une tige support (25) décalées angulairement l'une par rapport à l'autre.

6. Dispositif selon la revendication précédente **caractérisé en ce que** les branches radiales des pièces d'obturation (26) sont incurvées dans un sens puis dans l'autre.

7. Dispositif selon la revendication 4 **caractérisé en ce que** l'obturateur (24) est formé par la superposition décalée angulairement de pièces d'obturation (26, 28) et est solidarisé au tube plongeur (8) par une ou plusieurs pièces d'obturation (28) de plus grande longueur dont l'extrémité libre est solidarisée à la paroi interne du tube plongeur (8).

8. Dispositif selon l'une quelconque des revendications 4 à 7 **caractérisé en ce que** l'obturateur (24) est un enchevêtrement de formes plates ou filaires.

9. Dispositif selon l'une quelconque des revendications 5 à 8 **caractérisé en ce qu'**une bague de support et de renfort est montée dans la partie supérieure de l'obturateur (24) autour des pièces d'obturation (26, 28) afin d'empêcher que ces dernières puissent être forcées ou tordues par un outil extérieur.

10. Dispositif selon la revendication 1 **caractérisé en ce que** la collerette de fixation (13) est surmontée par la deuxième pièce de goulot en collerette d'extrémité (15) formant un nouveau goulot (16) pour l'orifice de remplissage (4) du réservoir (2) sur lequel s'adapte le bouchon (5) d'origine du réservoir.

11. Dispositif selon la revendication 10 **caractérisé en ce que** la pièce de goulot en collerette d'extrémité (15) est solidarisée à la collerette de fixation (13) du corps tubulaire plongeur (8) par des points de soudure prévus pour se rompre en cas de tentative d'extraction frauduleuse du dispositif antivol (1) hors du goulot du réservoir.

12. Dispositif selon la revendication 10 **caractérisé en ce que** la partie supérieure de la collerette de fixation (13) présente un ou plusieurs passages traversants (53) permettant de faire retomber dans le réservoir (2), du liquide notamment du carburant éventuellement présent dans le volume supérieur du corps tubulaire plongeur (8) sur la face supérieure de la collerette de fixation (13).

13. Dispositif selon la revendication 1 **caractérisé en ce que** le tube escamotable (7) de remplissage comporte un moyen de préhension.

14. Dispositif selon la revendication précédente **caractérisé en ce que** le tube escamotable (7) de remplissage est relié au bouchon (5) par un lien.

15. Dispositif selon la revendication précédente **caractérisé en ce que** la nouvelle pièce de goulot présente un diamètre agrandi dans sa partie inférieure.

16. Dispositif selon la revendication 1 **caractérisé en ce que** le tube escamotable de remplissage (7) comporte un obturateur de sécurité (29) comportant une pièce mobile d'obturation (30) prévue pour assurer la fermeture de l'ouverture supérieure du tube escamotable de remplissage (7).

17. Dispositif selon la revendication précédente **caractérisé en ce que** la pièce mobile d'obturation (30) est une pièce rabattable et/ou une pièce amovible intérieure ou extérieure.

18. Dispositif selon l'une quelconque des revendications 16 et 17 **caractérisé en ce que** la pièce mobile d'obturation (30) est une pièce montée pivotante (31) autour d'un axe longitudinal à la manière d'un obturateur de sécurité pivotant.

19. Dispositif selon la revendication précédente **caractérisé en ce que** la pièce montée pivotante (31) est une pièce plate de forme similaire à celle de l'ouverture supérieure du tube escamotable de remplissage (7).

20. Dispositif selon l'une quelconque des revendications 16 à 19 **caractérisé en ce que** la face inférieure (38) de la pièce mobile d'obturation (30) comporte une butée en saillie (39), servant de butée d'arrêt lors du pivotement en ouverture et en fermeture de la pièce mobile d'obturation (30).

21. Dispositif selon la revendication 16 **caractérisé en ce que** la pièce mobile d'obturation (30) est une pièce (40) montée pivotante autour d'un axe transversal (41) au tube escamotable de remplissage (7) à la manière d'un volet.

22. Dispositif selon la revendication précédente **caractérisé en ce qu'**une force de rappel maintient la pièce mobile d'obturation (30) en position de fermeture vers le haut contre un rebord (42) formant un épaulement intérieur pour le tube escamotable de remplissage (7) qui sert de siège à la pièce mobile d'obturation (30).

23. Dispositif selon la revendication 17 **caractérisé en ce que** la pièce mobile d'obturation (30) est formée de deux pièces en vis-à-vis (43, 44) montées chacune pivotantes autour d'un axe transversal (45, 46) au tube escamotable de remplissage (7) respectivement et à la manière de deux volets.

24. Dispositif selon la revendication précédente **caractérisé en ce qu'**une force de rappel maintient chacune des deux pièces pivotantes (43, 44) en position de fermeture vers le haut, contre un rebord (42) formant un épaulement intérieur pour le tube escamotable de remplissage (7) et qui sert de siège aux deux pièces (43, 44) de la pièce mobile d'obturation (30).

25. Dispositif selon l'une quelconque des revendications 23 et 24 **caractérisé en ce qu'**une conformation en décrochement assure une étanchéité entre les deux pièces pivotantes.

26. Dispositif selon la revendication 16 **caractérisé en ce que** la pièce mobile d'obturation (30) est une pièce (47) montée pivotante autour d'un axe transversal (48) central au tube escamotable de remplissage (7) à la manière d'un papillon.

27. Dispositif selon la revendication précédente **caractérisé en ce qu'**une force de rappel maintient la pièce mobile d'obturation (30) en position de fermeture contre un rebord intérieur en demi-cercle (49) et un rebord extérieur en demi-cercle (50) formant un épaulement intérieur pour le tube escamotable de remplissage (7) et qui sert de butée d'appui pour la pièce mobile d'obturation (30).

28. Dispositif selon l'une quelconque des revendications 16 à 27 **caractérisé en ce que** la pièce mobile d'obturation (30) est reliée de façon indissociable au bouchon du réservoir (5) par un lien (22) souple et déformable.

29. Dispositif selon la revendication précédente **caractérisé en ce que** le lien (22) est une chaînette métallique (51) dont l'extrémité inférieure est solidarisée contre la face supérieure (37) de la pièce mobile d'obturation (30) alors que son extrémité supérieure est solidarisée à la face inférieure (52) du bouchon de réservoir.

30. Dispositif selon la revendication 1 **caractérisé en ce que** la collerette de fixation (13) est bloquée en pivotement sur la pièce de goulot (3) du réservoir (2) à l'aide d'une pièce de blocage (55).

31. Dispositif selon la revendication précédente **caractérisé en ce que** la pièce de blocage (55) se présente sous la forme d'une patte plate à une extrémité arrondie (56) et dont l'extrémité opposée présente un rebord de calage (57) en saillie, se prolongeant de manière perpendiculaire par rapport au corps de la patte pour entrer dans une fente et assurer le blocage.

## Claims

1. An antitheft, anti-intrusion, and anti-overflow device for a liquid tank, especially a fuel tank, comprising a tubular plunger (8) introduced inside the tank through its filling orifice with a neck piece and attached thereto, which is composed of a coaxial plunger unit (6) formed of two cylindrical tubes comprising a plunger tube (8) and a retractable filling tube (7) sliding inside the plunger tube (8) and movable between a retracted anti-overflow position and an extended filling position in which it projects to the exterior and serves as an external filling conduit,
. the plunger tube (8) comprises on its lateral surface at a certain height at the level of its upper extremity a series of openings (19) for the passage of liquid, especially fuel, during filling, defining an upper filling space in fluid communication with the tank (2);
. the plunger tube (8) comprises toward the bottom, after the upper space, a lower space (12) closed on at least its lateral surface;
. the coaxial plunger unit (6) being attached to the tank (2) and to the original neck piece (3) being attached to that piece in place of the stopper, in that a second neck piece (15) forms the new filling orifice for adaptation to the tank cap (5)
**characterized in that :**
. the plunger tube (8) comprises at its upper extremity an attaching flange (13) forming a bearing against the orifice piece of the tank and that
. the second neck piece (15) is attached against the attaching flange (13).

2. A device according to claim 1 **characterized in that** the lower space is closed at the lower portion for collection and recovery of objects or products introduced through the tank filling neck, and to form between the two spaces a limit blocking introduction of a conduit that might be forcibly introduced through the neck in the anti-theft device.

3. A device according to claim 1 or 2 **characterized in that** the space in the coaxial plunger unit (6) in fluid communication with the internal tank space is occupied by an anti-penetration device (23).

4. A device according to the preceding claim **characterized in that** the anti-penetration device (23) on the coaxial plunger unit (6) is a closure unit equipped with a closure (24) making access to the openings that traverse it (19) difficult.

5. A device according to the preceding claim **characterized in that** the closure unit (24) is a unit formed of at least one or possibly several closure pieces (26) with radial branches, each of the pieces being attached so as to be superimposed on a support shaft (25) and angularly offset from one another.

6. A device according to the preceding claim **characterized in that** the radial branches on the closure pieces (26) are curved inward in one direction and then in the other.

7. A device according to claim 4 **characterized in that** the closure (24) is formed by angularly offsetting the closure pieces (26, 28) and it is joined to the plunger tube (8) by one or more longer closure pieces (28) with their unattached ends connected to the internal wall of the plunger tube (8).

8. A device according to any one of claims 4 through 7 **characterized in that** the closure (24) is a network of flat or string-like forms.

9. A device according to any one of claims 5 through 8 **characterized in that** a supporting and reinforcing ring is attached on the upper portion of the closure (24) around the closure pieces (26, 28) in order to prevent them from being forced or twisted by an exterior tool.

10. A device according to claim 1 **characterized in that** the attaching flange (13) is surmounted by the second neck piece with an end flange (15) forming a new neck (16) for the filling orifice (4) for the tank (2) for adaptation to the original cap (5).

11. A device according to claim 10 **characterized in that** the neck piece with the end flange (15) is connected to the attaching flange (13) on tubular plunger (8) by solder points designed to break during any attempt to fraudulently extract the anti-theft device (1) from the neck of the tank.

12. A device according to claim 10 **characterized in that** the upper portion of the attaching flange (13) has one or more passageways (53) traversing it, allowing any liquid, particularly fuel, that might be present in the upper space of the tubular body (8) on the upper surface of attaching flange (13) to drop back into the tank.

13. A device according to claim 1 **characterized in that** the retractable filling tube (7) comprises a gripping means.

14. A device according to the preceding claim **characterized in that** the retractable filling tube (7) is joined to the cap (5) by a connector.

15. A device according to the preceding claim **characterized in that** the new neck piece has an enlarged diameter in its lower portion.

16. A device according to claim 1 **characterized in that** the retractable filling tube (7) comprises a safety closure (29) comprising a movable closure (30) to ensure closure of the upper opening of the retractable filling tube (7).

17. A device according to the preceding claim **characterized in that** the movable closure piece (30) is a folding piece and/or a detachable interior or exterior piece.

18. A device according to either one of claims 16 and 17 **characterized in that** the movable closure piece (30) is a piece (31) that pivots on a longitudinal axle like a pivoting safety closure.

19. A device according to the preceding claim **characterized in that** the pivotably attached piece (31) is a flat piece similar in shape to the shape of the upper opening of the retractable filling tube (7).

20. Device according to any one of claims 16 through 19 **characterized in that** the lower surface (38) of the movable closure piece (30) comprises a projecting stop (39) serving as a stop when the movable closure piece (30) pivots to open and close.

21. A device according to claim 16 **characterized in** the movable closure piece (30) is a piece (40) that is pivotably attached about a transverse axle (41) on the retractable filling tube (7) like a flap.

22. A device according to the preceding claim **characterized in that** a repelling force maintains the movable closure piece (30) in closing position toward the top against a rim (42) that forms an interior shoulder for the retractable filling tube (7) that serves as a seating for the movable closure piece (30).

23. A device according to claim 17 **characterized in that** the movable closure piece (30) is formed of two pieces facing each other (43, 44) each pivoting about a transverse axle (45, 46) on the retractable filling tube (7), respectively, like two flaps.

24. A device according to the preceding claim **characterized in that** a repelling force maintains each of the two pivoting pieces (43, 44) in closing position toward the top against a rim (42) forming an interior shoulder for the removable filling tube (7) and which serves as a seating for the two pieces (43, 44) of the movable closure piece (30).

25. A device according to either one of claims 23 and 24 **characterized in that** a staggered formation ensures sealing between the two pivoting pieces.

26. A device according to claim 16 **characterized in that** the movable closure piece (30) is a piece (47) pivotably mounted on a central transverse axle (48) on the retractable filling tube (7) like a butterfly.

27. A device according to the preceding claim **characterized in that** a repelling force maintains the movable closure piece (30) in the closing position against a semi-circular interior rim (49) and a semi-circular exterior rim (50) forming an interior shoulder for the retractable filling tube (7) and which serves as a contact stop for the movable closure piece (30).

28. A device according to any one of claims 16 through 27 **characterized in that** the movable closure piece (30) is inseparably attached to the tank cap (5) with a flexible and deformable connector (22).

29. A device according to the preceding claim **characterized in that** the connector (22) is a small metal chain (51), the lower extremity of which is connected to the upper surface (37) of the movable closure piece (30), while its upper extremity is connected to the lower surface (52) of the tank cap.

30. A device according to claim 1 **characterized in that** the attaching flange (13) is blocked from pivoting on the neck piece (3) of the tank (2) by means of a stop piece (55).

31. A device according to the preceding claim **characterized in that** the stop piece (55) is in form of a flat clamp with a rounded end (56), the opposite extremity of which has a projecting wedged rim (57) extending perpendicular to the body of the clamp to engage in a slot and ensure blocking.

## Patentansprüche

1. Diebstahlsicherungs-, Einbruchsschutz- und Überlaufschutzvorrichtung für einen Flüssigkeitsbehälter, insbesondere für einen Kraftstoffbehälter, mit einem rohrförmigen Tauchkörper (8), der in den Tank durch dessen Einfüllstutzen-Öffnung eingeführt und an dieser befestigt ist, die aus einer koaxialen Taucheinheit (6) zusammengesetzt ist, die aus zwei zylindrischen Rohren gebildet ist, mit einem Tauchrohr (8) und einem einziehbaren Füllrohr (7), das in dem Tauchrohr (8) gleitend montiert ist und das zwischen einer eingezogenen Überlaufsicherungsposition und einer ausgezogenen Füllposition beweglich ist, in welcher es nach außen vorsteht und als externe Füllleitung dient,
- das Tauchrohr (8) umfasst an seiner seitlichen Oberfläche auf einer bestimmten Höhe, auf der Ebene seines oberen Endes, eine Reihe von Öffnungen (19) für den Durchlauf der Flüssigkeit, insbesondere des Kraftstoffs, während der Füllung, und begrenzt ein oberes Füllvolumen in fluidischer Verbindung mit dem Tank (2),
- das Tauchrohr (8) umfasst nach unten hin, dem oberen Volumen folgend, ein unteres Volumen (12), das mindestens an seiner Seitenfläche verschlossen ist,
Die koaxiale Taucheinheit (6) wird in dem Tank (2) und auf das Original-Halsstück (3) montiert, indem sie darauf an der Stelle des Verschlussstopfens befestigt wird, damit ein zweites Halsstück (15) eine neue Einfüllöffnung bildet, an die der Verschlussstopfen des Tankes angepasst werden kann, **gekennzeichnet dadurch, dass** das Tauchrohr (8) an seinem oberen Ende einen Befestigungsring (13) umfasst, der auf der Öffnung des Tankes eine Stütze bildet, und das zweite Halsstück (15) gegen den Befestigungsring (13) festgelegt ist.

2. Vorrichtung nach Anspruch 1, **gekennzeichnet dadurch, dass** das untere Volumen im unteren Teil verschlossen ist, um als Sammel- und Rückgewinnungsstelle von durch den Einfüllstutzen des Tankes eingeführten Gegenständen oder Produkten zu dienen, und um zwischen den beiden Volumen eine Entnahmegrenze zu bilden für eine Leitung, die zwangsweise durch das Halsstück in der Diebstahlsicherungsvorrichtung eingeführt würde.

3. Vorrichtung nach Anspruch 1 oder 2, **gekennzeichnet dadurch, dass** das Volumen der koaxialen Taucheinheit (6) in fluidischer Verbindung mit dem inneren Volumen des Tankes von einer Eindringschutzvorrichtung (23) besetzt ist.

4. Vorrichtung nach dem vorangehenden Anspruch, **gekennzeichnet dadurch, dass** die Eindringschutzvorrichtung (23) der koaxialen Taucheinheit (6) eine Verschlusseinheit ist, die mit einem Verschluss (24) ausgestattet ist, der den Zugang zu den Durchlauföffnungen (19) erschwert.

5. Vorrichtung nach dem vorangehenden Anspruch, **gekennzeichnet dadurch, dass** die Verschlusseinheit (24) eine Einheit ist, die durch mindestens eines oder sogar mehrere Verschlussteile (26) mit radialen Verzweigungen gebildet ist, wobei jedes der Teile übereinander auf einem Trägerschaft (25) winkelförmig zueinander versetzt montiert ist.

6. Vorrichtung nach dem vorangehenden Anspruch, **gekennzeichnet dadurch, dass** die radialen Verzweigungen der Verschlussteile (26) in eine Richtung gebogen sind und dann in eine andere.

7. Vorrichtung nach Anspruch 4, **gekennzeichnet dadurch, dass** der Verschluss (24) durch die winkelförmig versetzte Überlagerung der Verschlussteile (26, 28) gebildet ist und formschlüssig mit dem Tauchrohr (8) über ein oder mehrere Verschlussteile (28) mit größerer Länge verbunden ist, deren freies Ende formschlüssig mit der Innenwand des Tauchrohrs (8) verbunden ist.

8. Vorrichtung nach einem der Ansprüche 4 bis 7, **gekennzeichnet dadurch, dass** der Verschluss (24) ein Ineinandergreifen von flachen oder drahtartigen Formen ist.

9. Vorrichtung nach einem der Ansprüche 5 bis 8, **gekennzeichnet dadurch, dass** ein Halte- und Verstärkungsring in dem Oberteil des Verschlusses (24) um die Verschlussteile (26, 28) herum montiert ist, um zu verhindern, dass letztere durch ein äußeres Werkzeug aufgebrochen oder verdreht werden können.

10. Vorrichtung nach Anspruch 1, **gekennzeichnet dadurch, dass** der Befestigungsring (13) über das zweite Halsteil im Endbund (15) übersteht und so einen neuen Hals (16) für die Einfüllöffnung (4) des Tankes (2) bildet, an den der Originalstopfen (5) des Tankes angepasst ist.

11. Vorrichtung nach Anspruch 10, **gekennzeichnet dadurch, dass** das Halsstück im Endbund (15) formschlüssig mit dem Befestigungsring (13) des rohrförmigen Tauchkörpers (8) über Schweißpunkte verbunden ist, die bei einem arglistigen Entnahmeversuch der Diebstahlsicherungsvorrichtung (1) aus dem Halsstück des Tankes zerbrechen.

12. Vorrichtung nach Anspruch 10, **dadurch gekennzeichnet, dass** das Oberteil des Befestigungsrings (13) einen oder mehrere Durchbrüche (53) aufweist, wodurch es ermöglicht ist, die eventuell in dem oberen Volumen des rohrförmigen Tauchkörpers (8) auf der Oberseite des Befestigungsringes (13) vorhandene Flüssigkeit, insbesondere einen Kraftstoff, in den Tank (2) zurücklaufen zu lassen.

13. Vorrichtung nach Anspruch 1, **gekennzeichnet dadurch, dass** das einziehbare Füllrohr (7) ein Greifmittel umfasst.

14. Vorrichtung nach dem vorangehenden Anspruch, **gekennzeichnet dadurch, dass** das einziehbare Füllrohr (7) über eine Verbindung mit dem Stopfen (5) verbunden ist.

15. Vorrichtung nach dem vorangehenden Anspruch, **gekennzeichnet dadurch, dass** das neue Halsstück in seinem unteren Teil einen vergrößerten Durchmesser aufweist.

16. Vorrichtung nach Anspruch 1, **gekennzeichnet dadurch, dass** das einziehbare Füllrohr (7) einen Sicherheitsverschluss (29) mit einem beweglichen Verschlussteil (30) umfasst, das dazu vorgesehen ist, den Verschluss der oberen Öffnung des einziehbaren Füllrohrs (7) zu sichern.

17. Vorrichtung nach dem vorangehenden Anspruch, **gekennzeichnet dadurch, dass** das bewegliche Verschlussteil (30) ein herunterklappbares Teil und/oder ein inneres oder äußeres abnehmbares Teil ist.

18. Vorrichtung nach einem der Ansprüche 16 und 17, **gekennzeichnet dadurch, dass** das bewegliche Verschlussteil (30) ein nach Art eines drehbaren Sicherheitsverschlusses drehbar um eine Längsachse montiertes Teil (31) ist.

19. Vorrichtung nach dem vorangehenden Anspruch, **gekennzeichnet dadurch, dass** das drehbar montierte Teil (31) ein flaches Teil, ähnlich wie das der oberen Öffnung des einziehbaren Füllrohrs (7) ist.

20. Vorrichtung nach einem der Ansprüche 16 bis 19, **gekennzeichnet dadurch, dass** die Unterseite (38) des beweglichen Verschlussteils (30) einen überstehenden Anschlag (39) umfasst, der bei der Drehung beim Öffnen und beim Verschließen des beweglichen Verschlussteils (30) als Halteanschlag dient.

21. Vorrichtung nach Anspruch 16, **gekennzeichnet dadurch, dass** das bewegliche Verschlussteil (30) ein Teil (40) ist, das nach Art einer Klappe um eine Querachse (41) drehbar am einziehbaren Füllrohr (7) montiert ist.

22. Vorrichtung nach dem vorangehenden Anspruch 15, **gekennzeichnet dadurch, dass** eine Rückstellkraft das bewegliche Verschlussteil (30) in der Verschlussposition nach oben gegen einen Rand (42) hält, der eine innere Schulter für das einziehbare Füllrohr (7) bildet, die als Sitz des beweglichen Verschlussteils (30) dient.

23. Vorrichtung nach Anspruch 17, **gekennzeichnet dadurch, dass** das bewegliche Verschlussteil (30) durch zwei einander gegenüberliegende Teile (43, 44) gebildet wird, die jeweils nach Art von zwei Klappen um eine Querachse (45, 46) drehbar am einziehbaren Füllrohr (7) montiert sind.

24. Vorrichtung nach dem vorangehenden Anspruch, **gekennzeichnet dadurch, dass** eine Rückstellkraft jedes der beiden Schwenkteile (43, 44) in der Verschlussposition nach oben gegen einen Rand (42) hält, der eine innere Schulter für das einziehbare Füllrohr (7) bildet und der als Aufnahme für die zwei Teile (43, 44) des beweglichen Verschlussteils (30) dient.

25. Vorrichtung nach einem der Ansprüche 23 und 24, **gekennzeichnet dadurch, dass** deren Ausführung mit Seitenverschiebung eine Dichtigkeit zwischen den beiden Schwenkteilen sichert.

26. Vorrichtung nach Anspruch 16, **gekennzeichnet dadurch, dass** das bewegliche Verschlussteil (30) ein nach Art einer Drosselklappe um eine mittige Querachse (48) drehbar am einziehbaren Füllrohr (7) montiertes Stück (47) ist.

27. Vorrichtung nach dem vorangehenden Anspruch, **gekennzeichnet dadurch, dass** eine Rückstellkraft das bewegliche Verschlussteil (30) in Verschlussposition gegen einen halbkreisförmigen Innenrand (49) hält und ein halbkreisförmiger Außenrand (50) eine innere Schulter für das einziehbare Füllrohr (7) bildet und die als Stützanschlag für das bewegliche Verschlussteil (30) dient.

28. Vorrichtung nach einem der Ansprüche 16 bis 27, **gekennzeichnet dadurch, dass** das bewegliche Verschlussteil (30) untrennbar über eine biegsame und verformbare Verbindung (22) mit dem Stopfen des Tankes (5) verbunden ist.

29. Vorrichtung nach dem vorangehenden Anspruch, **gekennzeichnet dadurch, dass** die Verbindung (22) ein metallisches Kettchen (51) ist, dessen unteres Ende fest mit der Oberseite (37) des beweglichen Verschlussteils (30) verbunden ist, während sein oberes Ende mit der Unterseite (52) des Tankverschlusses verbunden ist.

30. Vorrichtung nach Anspruch 1, **gekennzeichnet dadurch, dass** der Befestigungsring (13) rotierend auf dem Halsstück (3) des Tankes (2) mit Hilfe eines Klemmstücks (55) blockiert wird.

31. Vorrichtung nach dem vorangehenden Anspruch, **gekennzeichnet dadurch, dass** das Klemmstück (55) die Form einer flachen Lasche mit einem abgerundeten Ende (56) hat, deren gegenüberliegendes Ende einen überstehenden Klemmrand (57) aufweist, der sich senkrecht zum Körper der Lasche verlängert, um in einen Spalt einzutreten und die Blockierung zu sichern.
